# FASCICULE DE BREVET EUROPEEN

(11) **EP 3 521 072 B1**
(45) Date de publication et mention de la délivrance du brevet: **06.04.2022**
(21) Numéro de dépôt: 19151909.9
(22) Date de dépôt: 15.01.2019
(51) Int. Cl.: B60G 17/015, B61F 5/30, B60G 17/017, B60G 17/052, B61F 5/10, B61F 5/22

(54) **DISPOSITIF D'AJUSTEMENT DE LA HAUTEUR D'UNE CAISSE D'UN VÉHICULE FERROVIAIRE**
REGULIERUNGSVORRICHTUNG DER HÖHE EINER KAROSSERIE EINES SCHIENENFAHRZEUGS
DEVICE FOR ADJUSTING THE HEIGHT OF A BODY OF A RAILWAY VEHICLE

(30) Priorité: 31.01.2018 FR 1850783
(43) Date de publication de la demande: 07.08.2019
(73) Titulaire: ALSTOM Transport Technologies, 93400 Saint-Ouen (FR)
(72) Inventeur: COTTIN, Fabrice, 71670 SAINT FIRMIN (FR); SARTI, Christophe, 17220 SAINT MÉDARD D'AUNIS (FR); BELLOT, Laurent, 71200 LE CREUSOT (FR); GUERIN, Olivier, 17230 SAINT-OUEN D'AUNIS (FR); HACHET, Joel, 17220 CLAVETTE (FR); HIBON, Samuel, 72000 LE MANS (FR)
(74) Mandataire: Lavoix

(56) Documents cités:
- WO-A1-2014/202631
- WO-A2-2006/103636
- CN-A- 105 946 494
- DE-A1-102006 027 388
- DE-A1-102008 021 648
- DE-C1- 4 414 868
- FR-A1- 2 833 231

## Description

La présente invention concerne un dispositif d'ajustement de la hauteur d'une caisse d'un véhicule ferroviaire.

On connait déjà, dans l'état de la technique, notamment d'après DE 44 14 868, un dispositif d'ajustement similaire à celui du préambule de la revendication 1.

Un véhicule ferroviaire comporte une caisse munie de portes d'accès. Lors d'un arrêt en gare, on souhaite, pour faciliter l'accès au véhicule, que les portes d'accès soient à un niveau constant et avantageusement au niveau du quai de gare. Cela est notamment important pour permettre l'accès au véhicule par des personnes à mobilité réduite.

La hauteur de la caisse est donc configurée à cet effet.

Or, la hauteur de la caisse diminue avec l'usure des roues, si bien que la hauteur des portes d'accès ne peut être assurée, et qu'un décalage avec le quai peut se présenter.

L'invention a notamment pour but de remédier à cet inconvénient, en fournissant un dispositif d'ajustement de la hauteur de la caisse, propre à compenser l'usure des roues.

A cet effet, l'invention a notamment pour objet un dispositif d'ajustement selon la revendication 1.

Par exemple, le premier mode de fonctionnement est destiné à fixer la hauteur de la caisse lorsque le véhicule circule, et le second mode de fonctionnement est destiné à fixer la hauteur de la caisse en gare. Le second mode de fonctionnement est réglé en fonction de l'usure des roues.

Ainsi, il est possible de régler la hauteur des portes du véhicule en gare, sans modifier le gabarit du véhicule lorsqu'il circule.

Un dispositif d'ajustement selon l'invention peut comporter en outre l'une ou plusieurs des caractéristiques suivantes, prises seules ou selon toutes combinaisons techniquement envisageables.
- Le vérin de commande comporte un piston relié à la vanne d'ajustement par une tringle.
- Le piston est mobile entre des première et seconde positions extrêmes, correspondant respectivement aux premier et second modes de fonctionnement, la pression d'alimentation étant la première pression lorsque le piston est dans la première position extrême, et la pression d'alimentation étant la seconde pression lorsque le piston est dans la seconde position extrême.

L'invention concerne également un véhicule ferroviaire comportant une caisse et des moyens de suspension pneumatiques secondaires portant la caisse, caractérisé en ce qu'il comporte un dispositif d'ajustement de la hauteur de la caisse tel que défini précédemment.

L'invention sera mieux comprise à la lecture de la description qui va suivre, donnée uniquement à titre d'exemple et faite en se référant aux figures annexées, parmi lesquelles :
- la figure 1 représente schématiquement un dispositif d'ajustement selon un premier exemple de mode de réalisation de l'invention, et
- la figure 2 représente schématiquement un dispositif d'ajustement selon un deuxième exemple de mode de réalisation de l'invention.

On a représenté, sur les figures, un dispositif 10 d'ajustement de la hauteur d'une caisse d'un véhicule ferroviaire.

Ce dispositif d'ajustement 10 est destiné à équiper un véhicule ferroviaire comportant au moins une caisse portée par des bogies. Le véhicule ferroviaire comporte également, pour chaque caisse, un dispositif de suspension ménagé entre les bogies et la caisse correspondante, le dispositif de suspension comportant de manière classique des moyens de suspension primaire et des moyens de suspension pneumatiques secondaires 12.

Les moyens de suspension pneumatiques secondaires 12 portent la caisse du véhicule ferroviaire.

Les moyens de suspension pneumatiques secondaires 12 sont alimentés en air comprimé par un circuit pneumatique 14, fournissant de l'air comprimé sous une pression d'alimentation vers les moyens de suspension pneumatiques secondaires 12.

Le circuit pneumatique 14 comporte une partie de basculement 16, propre à basculer entre un premier mode de fonctionnement, dans lequel le circuit pneumatique 14 alimente les moyens de suspension pneumatiques secondaires 12 avec une première pression, correspondant à une première hauteur/altitude de la caisse, et un second mode de fonctionnement, dans lequel le circuit pneumatique alimente les moyens de suspension pneumatiques secondaires 12 avec une seconde pression différente de la première, correspondant à une deuxième hauteur/altitude de la caisse.

Dans l'exemple décrit, la première pression est supérieure à la seconde. Toutefois, on pourrait indifféremment choisir l'inverse en modifiant mutadis mutandis la configuration générale du dispositif d'ajustement 10.

Ainsi, dans le premier mode de fonctionnement, les moyens de suspension pneumatiques secondaires 12 sont alimentés avec une pression supérieure, si bien que la hauteur de la caisse est élevée.

En revanche, dans le second mode de fonctionnement, les moyens de suspension pneumatiques secondaires 12 sont alimentés avec une pression inférieure, si bien que la hauteur de la caisse est basse.

Ainsi, il est possible de basculer entre la première et la seconde pression en fonction de la situation.

Plus particulièrement, la première pression correspond, par exemple, à la hauteur de circulation du véhicule ferroviaire. Les moyens de suspension pneumatiques 12 sont alors gonflés au maximum.

La seconde pression correspond à la hauteur du véhicule ferroviaire à quai. Cette hauteur dépend de l'usure des roues. La seconde pression est ainsi réglée lors d'une opération de maintenant, après vérification de l'usure des roues via une opération classique de profilage de roue.

Ainsi, lorsque la roue est neuve, la suspension est dégonflée partiellement, c'est-à-dire que la seconde pression est inférieure à la première pression, c'est-à-dire que la deuxième hauteur est inférieure à la première hauteur.

Lorsque la roue est usée, le véhicule reste au niveau du mode de circulation. La seconde pression est alors égale à la première pression, c'est-à-dire que la deuxième hauteur est égale à la première hauteur, ou en variante on ne bascule pas sur le second mode de fonctionnement dans ce cas.

Entre les deux, lorsque la roue est partiellement usée, alors la seconde pression est fixée en fonction du niveau d'usure de la roue, c'est-à-dire que la deuxième hauteur est fixée en fonction du niveau d'usure de la roue, entre sa valeur lorsque la roue est neuve et sa valeur lorsque la roue est usée.

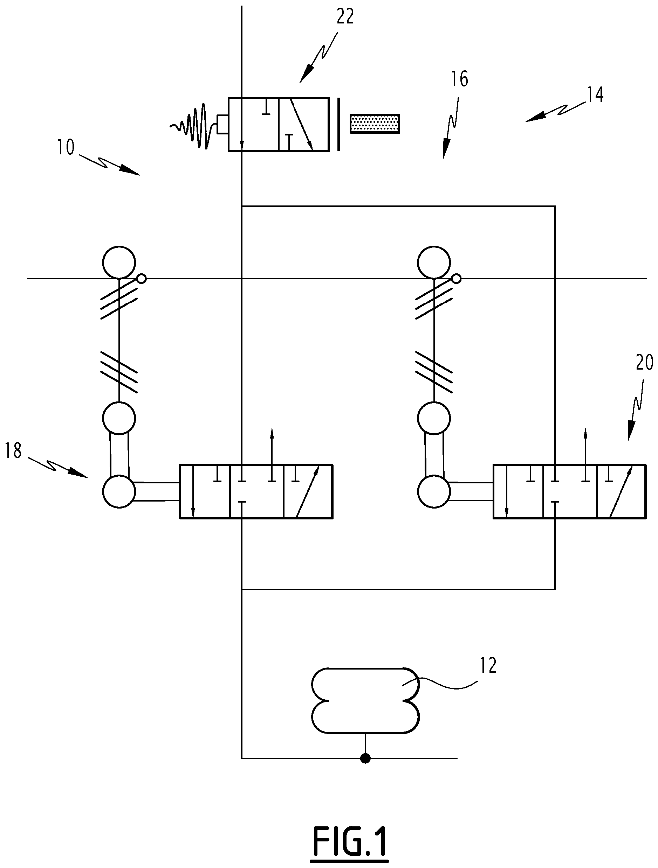

Conformément au premier mode de réalisation, représenté sur la figure 1, la partie de basculement 16 comporte des première 18 et seconde 20 vannes agencées respectivement sur des branches parallèles. Ainsi, l'air comprimé passe par l'une ou l'autre de ces première 18 et seconde 20 vannes, en fonction du mode de fonctionnement.

La première vanne 18 est configurée pour réguler la pression d'alimentation à la valeur de la première pression, et la seconde vanne 20 est configurée pour réguler la pression d'alimentation à la valeur de la seconde pression.

La partie de basculement comporte une troisième vanne 22 de sélection entre une première voie comprenant la première vanne 18, et une seconde voie comprenant la seconde vanne 20.

La troisième vanne de sélection 22 est par exemple une électrovanne commandée automatiquement, par exemple par un système de contrôle et de gestion de train (TCMS), en fonction d'au moins un critère prédéfini.

Conformément à un exemple de réalisation, le critère est un critère de vitesse du véhicule ferroviaire. Ainsi, dès que la vitesse du véhicule descend en dessous d'un seuil prédéfini, ou en variante est nulle, alors la troisième vanne de sélection 22 passe de la première à la seconde voie. Ainsi, en gare, la vitesse étant nulle, la hauteur du véhicule baisse automatiquement en passant dans le second mode de fonctionnement.

En revanche, dès que la vitesse du véhicule monte au-dessus du seuil prédéfini, ou en variante est non-nulle, alors la troisième vanne de sélection 22 passe de la seconde à la première voie. Ainsi, lorsque le véhicule circule, il passe dans le premier mode de fonctionnement.

Un autre critère possible est celui d'ouverture de portes du véhicule ferroviaire. Ainsi, le véhicule passe dans le second mode de fonctionnement en cas de commande d'ouverture de porte, et dans le premier mode de fonctionnement en cas de commande de fermeture de porte.

Selon une autre variante non revendiquée, un critère possible est celui de la proximité du véhicule ferroviaire avec une gare d'arrêt, une telle information étant connue à l'aide d'une information de localisation du véhicule ferroviaire et, par exemple, d'un système de localisation GPS associé au véhicule. Dans cette variante, le véhicule passe dans le second mode de fonctionnement lorsque la distance entre le véhicule ferroviaire et la gare d'arrêt est inférieure à un seuil prédéterminé et dans le premier mode de fonctionnement lorsque la distance entre le véhicule ferroviaire et la gare d'arrêt est supérieure à un seuil prédéterminé.

Selon une autre variante, le critère prédéfini correspond à une combinaison d'au moins deux des critères de vitesse, ouverture des portes et proximité du véhicule ferroviaire avec une gare d'arrêt, décrits ci-dessus.

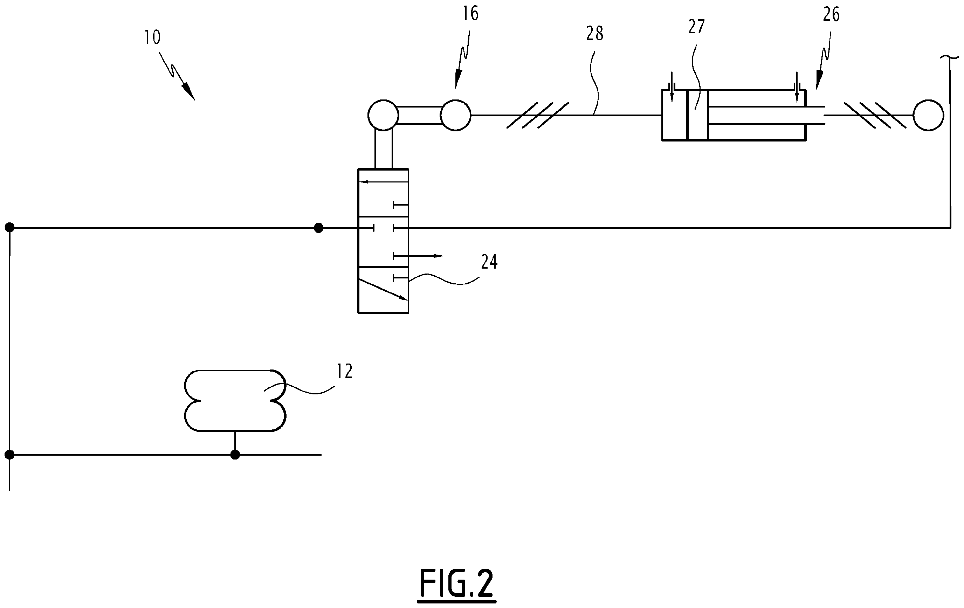

On a représenté sur la figure 2 un dispositif d'ajustement 10 selon un second exemple de mode de réalisation de l'invention. Sur cette figure, les éléments analogues à ceux de la figure précédente sont désignés par des références identiques.

Conformément à ce second mode de réalisation, la partie de basculement 16 comporte une vanne d'ajustement 24 propre à être déplacée entre une première position, dans laquelle la vanne d'ajustement régule la pression d'alimentation à la valeur de la première pression correspondant à la première hauteur, et une seconde position, dans laquelle la vanne d'ajustement régule la pression d'alimentation à la valeur de la seconde pression, correspondant à la deuxième hauteur.

La partie de basculement 16 comporte avantageusement un vérin 26 de commande de position de la vanne d'ajustement 24 entre ses première et seconde positions. Le vérin de commande 26 est avantageusement commandé par une électrovanne.

L'électrovanne est avantageusement commandée automatiquement, par exemple par un système de contrôle et de gestion de train (TCMS), en fonction d'au moins un critère prédéfini.

Conformément à un exemple de réalisation, le critère est un critère de vitesse du véhicule ferroviaire. Ainsi, dès que la vitesse du véhicule descend en dessous d'un seuil prédéfini, ou en variante est nulle, alors vanne d'ajustement 24 passe de la première à la seconde position. Ainsi, en gare, la vitesse étant nulle, la hauteur du véhicule baisse automatiquement en passant dans le second mode de fonctionnement.

En revanche, dès que la vitesse du véhicule monte au-dessus du seuil prédéfini, ou en variante est non-nulle, alors vanne d'ajustement 24 passe de la seconde à la première position. Ainsi, lorsque le véhicule circule, il passe dans le premier mode de fonctionnement.

Un autre critère possible est celui d'ouverture de portes du véhicule ferroviaire. Ainsi, le véhicule passe dans le second mode de fonctionnement en cas de commande d'ouverture de porte, et dans le premier mode de fonctionnement en cas de commande de fermeture de porte.

Selon une autre variante, un critère possible est celui de la proximité du véhicule ferroviaire avec une gare d'arrêt, une telle information étant connue à l'aide d'une information de localisation du véhicule ferroviaire et, par exemple, d'un système de localisation GPS associé au véhicule. Dans cette variante, le véhicule passe dans le second mode de fonctionnement lorsque la distance entre le véhicule ferroviaire et la gare d'arrêt est inférieure à un seuil prédéterminé et dans le premier mode de fonctionnement lorsque la distance entre le véhicule ferroviaire et la gare d'arrêt est supérieure à un seuil prédéterminé.

Selon une autre variante, le critère prédéfini correspond à une combinaison d'au moins deux des critères de vitesse, ouverture des portes et proximité du véhicule ferroviaire avec une gare d'arrêt, décrits ci-dessus.

La pression d'alimentation dépend de la position de la vanne d'ajustement 24. Cette position est modifiée par le vérin de commande 26.

Plus particulièrement, le vérin de commande 26 comporte un piston 27 relié à la vanne d'ajustement 24 par une tringle 28. Le piston 27 est mobile entre des première et seconde positions extrêmes, correspondant respectivement aux premier et second modes de fonctionnement. En d'autres termes, la pression d'alimentation est la première pression lorsque le piston 27 est dans la première position extrême, et la pression d'alimentation est la seconde pression lorsque le piston 27 est dans la seconde position extrême.

Ainsi, la seconde position extrême est établie lors d'une maintenance en fonction de l'usure des roues, pour que la seconde pression soit adaptée à cette usure.

On notera que l'invention n'est pas limitée aux modes de réalisation précédemment décrits, et pourrait présenter diverses variantes complémentaires.

## Revendications

1. Dispositif (10) d'ajustement de la hauteur d'une caisse d'un véhicule ferroviaire, comportant des moyens de suspension pneumatiques secondaires (12) destinés à porter la caisse du véhicule ferroviaire, dans lequel :
- le dispositif d'ajustement (10) comporte un circuit pneumatique (14) fournissant de l'air comprimé sous une pression d'alimentation aux moyens de suspension pneumatiques secondaires (12), le circuit pneumatique (14) comportant une partie (16) de basculement entre un premier mode de fonctionnement, dans lequel le circuit pneumatique (14) alimente les moyens de suspension pneumatiques secondaires avec une première pression, et un second mode de fonctionnement, dans lequel le circuit pneumatique (14) alimente les moyens de suspension pneumatiques secondaires avec une seconde pression différente de la première pression,
- - la partie de basculement (16) comporte une vanne d'ajustement (24) propre à se déplacer entre une première position, dans laquelle la vanne d'ajustement (24) régule la pression d'alimentation à la valeur de la première pression, correspondant à une première hauteur de la caisse, et une seconde position, dans laquelle la vanne d'ajustement (24) régule la pression d'alimentation à la valeur de la seconde pression, correspondant à une deuxième hauteur de la caisse
- le dispositif d'ajustement (10) comporte un vérin (26) de commande de position de la vanne d'ajustement (24) entre ses première et seconde positions,
- le vérin de commande (26) est commandé par une électrovanne commandée automatiquement,
**caractérisé en ce que** :
- l'électrovanne est commandée par un système de contrôle et de gestion de train (TCMS), en fonction d'au moins un critère prédéfini,
- le critère prédéfini est choisi parmi un critère de vitesse du véhicule ferroviaire, et un critère d'ouverture de portes du véhicule ferroviaire.

2. Dispositif d'ajustement (10) selon la revendication 1, dans lequel le vérin de commande (26) comporte un piston (27) relié à la vanne d'ajustement (24) par une tringle (28).

3. Dispositif d'ajustement (10) selon la revendication 2, dans lequel le piston (27) est mobile entre des première et seconde positions extrêmes, correspondant respectivement aux premier et second modes de fonctionnement, la pression d'alimentation étant la première pression lorsque le piston (27) est dans la première position extrême, et la pression d'alimentation étant la seconde pression lorsque le piston (27) est dans la seconde position extrême.

4. Véhicule ferroviaire comportant une caisse et des moyens de suspension pneumatiques (12) secondaires portant la caisse, **caractérisé en ce qu'**il comporte un dispositif d'ajustement (10) de la hauteur de la caisse selon l'une quelconque des revendications 1 à 3.

## Patentansprüche

1. Vorrichtung (10) zum Einstellen der Höhe eines Wagenkastens eines Schienenfahrzeugs, umfassend sekundäre Luftfederungseinrichtungen (12), die dazu bestimmt sind, den Wagenkasten des Schienenfahrzeugs zu tragen, wobei:
- die Einstellvorrichtung (10) einen pneumatischen Kreislauf (14) umfasst, der Druckluft unter einem Versorgungsdruck an die sekundären Luftfederungseinrichtungen (12) bereitstellt, der pneumatische Kreislauf (14) umfassend einen Abschnitt (16) zum Umschalten zwischen einem ersten Betriebsmodus, in dem der pneumatische Kreislauf (14) die sekundären Luftfederungseinrichtungen mit einem ersten Druck versorgt, und einem zweiten Betriebsmodus, in dem der pneumatische Kreislauf (14) die sekundären Luftfederungseinrichtungen mit einem zweiten Druck versorgt, der sich von dem ersten Druck unterscheidet,
- der Umschaltabschnitt (16) ein Einstellventil (24) umfasst, das geeignet ist, um sich zwischen einer ersten Position, in der das Einstellventil (24) den Versorgungsdruck auf den Wert des ersten Drucks reguliert, der einer ersten Höhe des Kastens entspricht, und einer zweiten Position, in der das Einstellventil (24) den Versorgungsdruck auf den Wert des zweiten Drucks reguliert, der einer zweiten Höhe des Kastens entspricht, zu bewegen,
- die Einstellvorrichtung (10) einen Zylinder (26) zur Steuerung der Position des Einstellventils (24) zwischen seiner ersten und zweiten Position umfasst,
- der Steuerzylinder (26) durch ein automatisch gesteuertes Magnetventil gesteuert wird,
**dadurch gekennzeichnet, dass**:
- das Magnetventil von einem Zugsteuerungs- und -managementsystem (TCMS) in Abhängigkeit von mindestens einem vordefinierten Kriterium gesteuert wird,
- das vordefinierte Kriterium aus einem Kriterium für die Geschwindigkeit des Schienenfahrzeugs und einem Kriterium für das Öffnen von Türen des Schienenfahrzeugs ausgewählt ist.

2. Einstellvorrichtung (10) nach Anspruch 1, wobei der Steuerzylinder (26) einen Kolben (27) umfasst, der über eine Stange (28) mit dem Einstellventil (24) verbunden ist.

3. Einstellvorrichtung (10) nach Anspruch 2, wobei der Kolben (27) zwischen einer ersten und einer zweiten Endlage beweglich ist, die jeweils dem ersten und dem zweiten Betriebsmodus entsprechen, wobei der Versorgungsdruck der erste Druck ist, wenn der Kolben (27) in der ersten Endlage ist, und der Versorgungsdruck der zweite Druck ist, wenn der Kolben (27) in der zweiten Endlage ist.

4. Schienenfahrzeug, umfassend einen Wagenkasten und sekundäre Luftfederungseinrichtungen (12), die den Kasten tragen, **dadurch gekennzeichnet, dass** es eine Vorrichtung (10) zum Einstellen der Höhe des Wagenkastens nach einem der Ansprüche 1 bis 3 umfasst.

## Claims

1. A rail vehicle body height adjustment device (10) comprising secondary air suspension means (12) for supporting the rail vehicle body, wherein:
- the adjustment device (10) comprises a pneumatic circuit (14) supplying compressed air at a supply pressure to the secondary air suspension means (12), the pneumatic circuit (14) comprising a portion (16) for switching between a first mode of operation, in which the pneumatic circuit (14) supplies the secondary air suspension means with a first pressure, and a second mode of operation, in which the pneumatic circuit (14) supplies the secondary air suspension means with a second pressure different from the first pressure,
- the switching portion (16) comprises an adjustment valve (24) adapted to move between a first position, in which the adjustment valve (24) regulates the supply pressure to the value of the first pressure, corresponding to a first height of the body, and a second position, in which the adjustment valve (24) regulates the supply pressure to the value of the second pressure, corresponding to a second height of the body
- the adjustment device (10) comprises an actuator (26) for controlling the position of the adjustment valve (24) between its first and second positions,
- the control cylinder (26) is controlled by an automatically controlled solenoid valve,
**characterised in that**:
- the solenoid valve is controlled by a train control and management system (TCMS), depending on at least one predefined criterion,
- the predefined criterion is selected from a criterion for the speed of the rail vehicle, and a criterion for the openness of the doors of the rail vehicle.

2. The adjustment device (10) according to claim 1, wherein the control actuator (26) comprises a piston (27) connected to the adjustment valve (24) by a rod (28).

3. The adjustment device (10) according to claim 2, wherein the piston (27) is movable between first and second end positions, corresponding to the first and second modes of operation respectively, the supply pressure being the first pressure when the piston (27) is in the first end position, and the supply pressure being the second pressure when the piston (27) is in the second end position.

4. A railway vehicle comprising a body and secondary pneumatic suspension means (12) supporting the body, **characterised in that** it comprises a device (10) for adjusting the height of the body according to any of claims 1 to 3.
